## Europäisches Patentamt
## European Patent Office
## Office européen des brevets

(11) Numéro de publication: **0 060 759 B1**

(12) **FASCICULE DE BREVET EUROPEEN**

(19)

(45) Date de publication du fascicule du brevet:
11.09.85

(21) Numéro de dépôt: **82400380.0**

(22) Date de dépôt: **05.03.82**

(51) Int. Cl.⁴: **B 29 C 61/06**, B 32 B 17/10

(54) **Feuille destinée à la fabrication d'intercalaires de vitrages feuilletés notamment de pare-brise, et sa fabrication.**

(30) Priorité: **06.03.81 FR 8104499**

(43) Date de publication de la demande:
**22.09.82 Bulletin 82/38**

(45) Mention de la délivrance du brevet:
**11.09.85 Bulletin 85/37**

(84) Etats contractants désignés:
**AT BE CH DE FR GB IT LI LU NL SE**

(56) Documents cités:
**FR - A - 1 157 377**
**FR - A - 2 081 903**
**FR - A - 2 108 124**
**FR - A - 2 158 287**
**US - A - 3 038 208**
**US - A - 3 067 585**
**US - A - 3 370 111**
**US - A - 3 679 435**
**US - A - 3 696 186**

(73) Titulaire: **SAINT-GOBAIN VITRAGE, Les Miroirs 18, avenue d'Alsace, F-92400 Courbevoie (FR)**
(84) Etats contractants désignés: **BE CH FR GB IT LI LU NL SE AT**

(73) Titulaire: **VEGLA Vereinigte Glaswerke GmbH, Viktoria Allee 3-5, D-5100 Aachen (DE)**
(84) Etats contractants désignés: **DE**

(72) Inventeur: **Roentgen, Paul, Talweg 7, D-5106 Roetgen/Rott (DE)**
Inventeur: **Krumm, Helmut, 14 Lohmühlenstrasse 2, D-5100 Aachen (DE)**
Inventeur: **Lenzen, Günter, 14 Teichwinkel, D-5100 Aachen (DE)**
Inventeur: **Schilde, Heinz, 40 Salmanusstrasse, D-5102 Wuerselen (DE)**

(74) Mandataire: **Muller, René et al, SAINT-GOBAIN RECHERCHE 39, quai Lucien Lefranc, F-93304 Aubervilliers (FR)**

## Description

L'invention a pour objet uen feuille d'un haut polymère synthétique thermoplastique destiné à la fabrication de couches intercalaires de vitrages en verre feuilleté tels que des pare-brises automobiles. Elle a aussi pour objet un procédé de fabrication d'une telle feuille à partir d'un ruban continu.

Les feuilles de matière plastique nécessaires à la fabrication d'un vitrage de sécurité en verre feuilleté sont habituellement livrées sous forme d'un ruban enroulé. Pour les utiliser, après avoir déroulé le ruban, on le débite en tronçons généralement rectangulaires ou »primitifs« que l'on place entre deux feuilles de verre silicate avec lesquelles on les assemble par utilisation de la chaleur et sous pression avant d'en éliminer les marges.

En général, les pare-brise d'automobiles ont à peu près la forme de trapèzes dont les deux bases sont cintrées, d'une façon à peu près circulaire, en fonction de la forme du véhicule. On dispose souvent, le long de l'arête supérieure, une zone filtrante anti-éblouissante, qui revêt la forme d'une bande colorée, et qui est en général obtenue par coloration de la feuille thermoplastique.

Dans un ruban continu rectiligne à zone latérale teintée, la limite du domaine coloré court en ligne droite, alors que l'arête supérieure du pare-brise est courbe: lorsque la bande colorée doit courir parallèlement à l'arête du vitrage pour des raisons esthétiques ou autres, par exemple pour respecter les normes de visibilité, il faut donc, avant de la mettre en place, conformer la feuille intercalaire au moyen d'une extension inégalement marquée.

Il est alors connu de chauffer ensemble, après découpe, des primitifs rectangulaires, afin de les porter à température voulue, puis de leur donner une déformation plastique en exerçant une traction inégale (US-A-3 341 889). C'est un procédé coûteux car il faut cintrer les feuilles une à une.

Selon un autre procédé connu (DE-A-2 742 897) le ruban est porté en continu à la température de déformation et enroulé sous tension sur un tambour conique qui lui donne le cintrage désiré. Le procédé travaille certes de façon continue, mais en raison de la différence de longueur voulue entre bords longitudinaux, il faut employer des tambours coniques ce qui rend plus difficile le magasinage, le transport et la mise en oeuvre des opérations ultérieures et, de plus, utiliser des tambours dont les diamètres extrèmes diffèrent en fonction du dégré de cintrage, ce qui augmente encore la difficulté.

Il est également connu de faire passer le ruban de façon continue devant un organe de chauffage, qui ne chauffe que la zone qu'il y a lieu d'étirer plus fortement pour la soumettre ensuite à un étirage qui provoque une déformation permanente dans la région chauffée (US-A-3 038 208). Le ruban cintré qui en résulte est immédiatement tronçonné. L'inconvénient est que le ruban, dans la mesure même où l'on évite de le stocker et de le transporter sur des mandrins coniques, doit être tronçonné à priori.

Dans un autre domaine d'application, on connait d'après la publication de brevet français 2 081 903 un film de matière plastique servant d'emballage en forme d'enveloppe tubulaire pour des aliments tels les saucisses. Une partie longitudinale du film est traitée thermiquement pour présenter un coefficient de retrait thermique différent de celui de la partie non traitée, de sorte qu'après un chauffage, la saucisse prend une forme arquée. Le traitement thermique s'effectue alors que le film est sous forme tubulaire et sous tension, par passage d'une partie du tube dans un milieu chaud. Le brevet américain US-A-3 679 435 décrit un produit et une technique très semblable à celle décrite dans le document précédent.

L'invention a pour objet de fournir un ruban approprié à la fabrication de tels intercalaires cintrés, mais que l'on puisse stocker et transporter de façon habituelle, c'est à dire en principe sous forme de grandes longueurs enroulées sur mandrins cylindriques, et qui fournisse des intercalaires d'une forme proche de celle vitrages par transformation de primitifs découpés dans ce ruban, sans opération accessoire de conformation.

Selon l'invention, le ruban présente des contraintes de traction longitudinales gelées dont l'intensité varie dans les sens transversal, les contraintes de traction gelées atteignant leur maximum le long d'un bord longitudinal et décroissant régulièrement en direction du bord opposé, en étant d'un niveau tel qu'après découpage dans le ruban en vue de leur transformation, les primitifs se déforment en feuilles cintrées sans emploi de forces de conformation extérieures, par simple relâchement des contraintes sous réchauffage à température voulue, le ruban étant constitué d'un haut polymère ayant une température de transformation inférieure à la température ambiante, et étant maintenu par refroidissement en dessous de ladite température de transformation.

Contrairement à ce qui se passe dans les procédés connus, le ruban n'est par recuit après déformation; au contraire, le taux de déformation plastique nécessaire pour lui donner ultérieurement la forme voulue lui est conféré par étirage, tandis que les domaines qui ne requièrent qu'une déformation plastique moindre, voire nulle, subissent un allongement élastique suffisant pour que le ruban conserve une forme rectiligne, les contraintes de traction existant alors dans le domaine de déformation élastique étant gelées, sous cette déformation uniforme, par refroidissement rapide et uniforme du ruban à une température inférieure à la température de relâchement des contraintes, puis le produit conservé à une telle température jusqu'à ce que l'on en ait besoin pour les opérations ultérieures.

Il est certes possible de découper le ruban immédiatement après avoir gelé les tensions, pour stocker et transporter les primitifs en piles: toutefois, il est particulièrement avantageux de l'enrouler de façon classique sur un mandrin cylindrique.

Le ruban élaboré selon l'invention conserve, même sur une longue période, un taux constant de contraintes gelées hétérogènes et, après réchauffage au dessus de la température de relâchement des contraintes, prend plus ou moins vite, selon la température atteinte, une forme correspondant à son degré variable d'allongement élastique.

L'invention est particulièrement intéressante pour la fabrication d'intercalaires munis de bandes filtrants cintrées. Elle n'est cependant pas limitée à ce cas; lorsqu'on l'utilise, par exemple, pour la fabrication de feuilles entièrement claires, on obtient une économie de produit puisque les primitifs prennent une forme correspondant au dessin trapézoïdal des pare-brise, de sorte que leur surface est mieux utilisée.

L'invention sera décrite de plus près ci-dessous, en référence aux dessins qui montrent:

Figure 1: une feuille avec l'indication schématique de la structure des contraintes de traction gelées,

Figure 2: cette même feuille après élimination des tensions internes,

Figure 3: un diagramme schématique qui met en évidence la détermination de la température de relâchement des contraintes au vu de l'évolution des diverses propriétés mécaniques des hauts polymères synthétiques en fonction de la température,

Figure 4: une représentation schématique d'un dispositif de fabrication d'un ruban selon l'invention,

Figure 5: une coupe selon la ligne V-V de la figure 4.

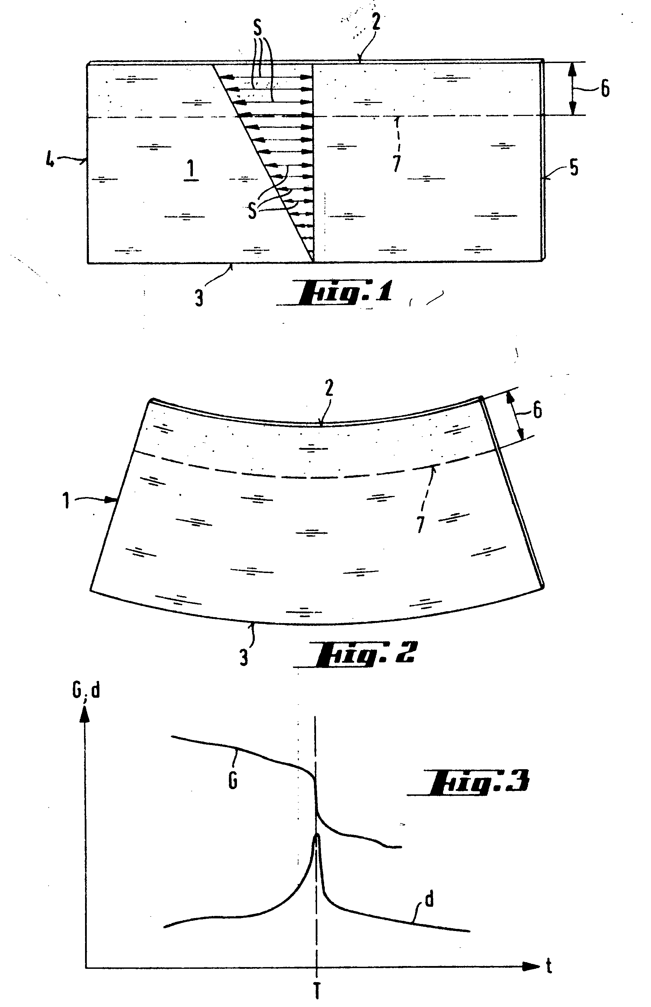

La feuille rectangulaire 1 représentée par la figure 1 possède deux bords longitudinaux 2 et 3, et deux bords transversaux 4 et 5 le long desquels elle a été découpée dans un ruban continu. Le long du bord 2 et à son voisinage immédiat s'étend une bande 6 formant un filtre lumineux coloré, dont la frontière 7 court parallèlement au bord 2.

La feuille est constituée d'un haut polymère synthétique thermoplastique, par exemple une feuille de polyvinylbutyral renfermant 15 à 30% en poids de plastifiant, d'un usage courant pour la fabrication des vitrages feuilletés, en particulier des pare-brise. Elle se trouve soumise à des tensions internes gelées qui exercent essentiellement dans la direction de sa longueur une traction dont la valeur est schématisée par les flèches S. Dans l'exemple représenté, ces tensions sont nulles au voisinage immédiat du bord longitudinal 3, commencent à se développer le long de celui-ci et croissent constamment au fur et à mesure que l'on s'en éloigne jusqu'à un maximum qui se trouve le long du bord 2.

Tant que le produit se trouve maintenu à une température inférieure à la température de relâchement des contraintes de la matière synthétique considérée, les tensions qui s'y exercent ne provoquent aucun déplacement moléculaire; la feuille conserve donc sa structure et sa forme.

On peut donc, après gel des tensions internes, découper dans le ruban des feuilles rectangulaires que l'on empile pour les expédier. Mais on peut aussi stocker et transporter le ruban contraint enroulé sur un mandrin cylindrique avec, le cas échéant, une feuille intercalaire ou un saupoudrage de bicarbonate de sodium.

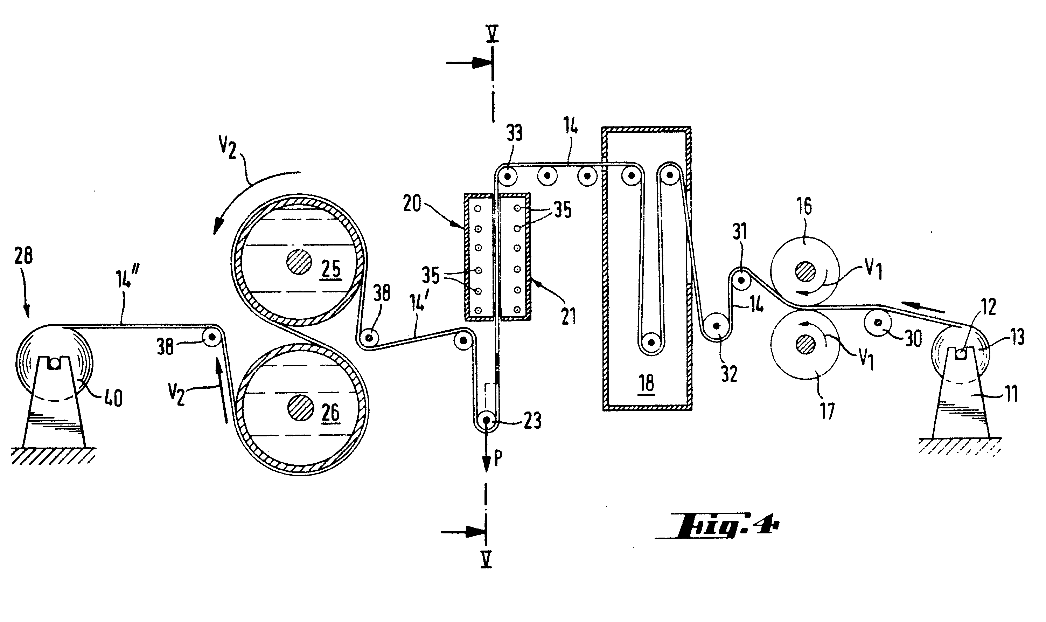

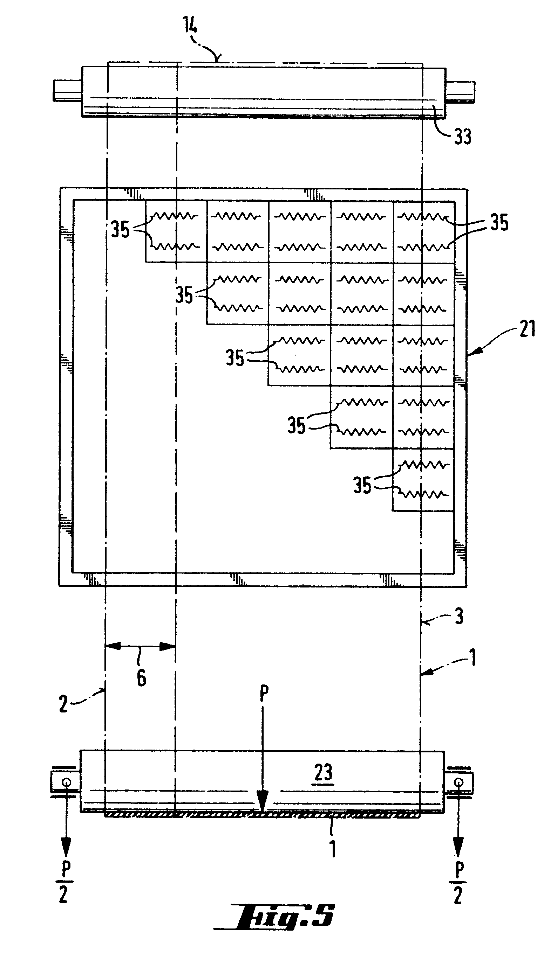

Dès qu'elle passe au dessus de la température de relâchement des contraintes du matériau considéré, la feuille commence à se raccourcir de façon inégale sous l'action de ces dernières et celles-ci se relâchent au fur et à mesure. Le raccourcissement de la feuille correspond au taux de contraintes et son maximum se produit le long du bord 2, tandis que la longueur du bord 3 reste pratiquement inchangée. Après élimination des contraintes internes la feuille prend la forme représentée sur la figure 2. Il en résulte que la limite 7 du filtre de la bande filtrante possède comme on le désirait un tracé circulaire. Dans une bonne part des utilisations, il faut geler les tensions internes à une valeur conduisant à la limite après leur élimination, à une courbure dont le rayon moyen est de l'ordre de 100 cm. Les courbures du bord longitudinal supérieur des pare-brise courants ne sont cependant pas les mêmes pour tous les modèles. Pour pouvoir fabriquer des modèles très différents de pare-brise, en particulier munis d'un filtre optique de densité progressive parallèle à leur bord supérieur, il faut disposer de rubans renfermant des contraintes gelées d'intensités différentes, dont le niveau s'établit sans difficulté, pour chacune des diverses utilisations, en modifiant le taux d'étirage c'est-à-dire l'intensité des tensions induites, par réglage des forces de traction exercées dans la zone d'étirage et de la température de la feuille au cours de l'opération, ce que les figures 4 et 5 permettront d'expliquer de façon plus détaillée.

Une caractéristique essentielle de mise en oeuvre de l'invention est la connaissance de la température de relâchement des contraintes du matérieu qui constitue le ruban. Il s'agit de la température moyenne T du domaine de figeage d'une substance à haut poids moléculaire dans lequel, à l'échelle microscopique, le mouvement brownien des constituants élémentaires des chaines moléculaires se trouve figé, le matériau atteignant ainsi l'état vitreux. On l'appelle aussi température de transformation ou température de passage à l'état vitreux. A cette température se fige la répartition des lacunes précédemment créées, de sorte qu'il ne peut plus, au dessous, se produire de réorganisations internes et que les déformations accompagnées de contraintes élastiques existantes se figent, mais s'effaceront au contraire si on la dépasse.

Comme une série de propriétés physiques se modifie au passage de cette température, on peut la déterminer avec une assez grande précision en observant en particulier l'évolution du module de traction dynamique G ou du facteur de pertes mécaniques d. L'évolution de ces deux grandeurs en fonction de la température est représentée schématiquement sur la figure 3. On voit que dans un domaine relativement étroit, c'est-à-dire en pratique de l'ordre de 5° C, dont la valeur médiane est repérée T sur le diagramme, le module de traction dynamique G chute brutalement lorsque la température augmente; dans le même domaine le facteur de pertes mécaniques d présente un maximum brutal. Ces grandeurs peuvent être déterminées de façon utile par un test au pendule de torsion selon la norme DIN 53 445.

Dans le cas d'un polyvinylbutyral de type classique, renfermant 30% en poids de plastifiant, le test en question fournit un domaine de températures allant de 285 à 291 K correspondant à une température de transformation T de 288 K. Sur un autre polyvinylbutyral de type courant, renfermant 24% en poids de plastifiant, le test donne un domaine de figeage compris entre 290 et 296 K et une température de transformation T de 293 K. Pour provoquer à coup sûr le gel des contraintes on conçoit qu'il est recommandé de dépasser cette température de 5 à 10° C environ.

Le processus approprié à la fabrication d'un ruban contraint conformément à l'invention peut par exemple être mis en oeuvre à l'aide du dispositif représenté sur la figure 4. Ce dispositif comprend essentiellement un berceau 11 recevant de façon à lui permettre de tourner sur un mandrin cylindrique 12 un rouleau 13 formé par enroulement du ruban 14, un train de rouleaux dérouleurs 16 et 17 fixant la vitesse à laquelle le rouleau 13 débite le ruban 14, une chambre de climatisation classique ou étuve 18, un organe de chauffage constitué d'une chambre formée de deux caissons 20 et 21, un rouleau valseur de compensation 23, deux tambours moteurs refroidis 25 et 26 et un réenrouleur 28. Le ruban 14 débité par le rouleau 13 est saisi par le train des rouleaux 16 et 17 après passage sur un rouleau de guidage 30. Ce train tourne à un régime conférant aux rouleaux d'entraînement 16 et 17 une vitesse périphérique constante V₁. Le ruban 14 est dirigé à cette vitese V₁, après passage sur des rouleaux de renvoi 31 et 32, vers l'étuve 18 à l'intérieur de laquelle son taux d'humidité est ajusté. A la sortie de cette étuve, un rouleau de guidage 33 le conduit vers la chambre de chauffe 20, 21 où il est soumis, par exemple par rayonnement, à un chauffage hétérogène conduit de telle sorte que la température atteigne sa valeur maximale le long de l'un des bords longitudinaux et décroisse régulièrement en direction du bord opposé. Le long de ce dernier, à savoir le bord 2 longé par le filtre 6, la température de la feuille ne doit pas sensiblement dépasser la température ambiante.

Le profil de températures voulu, transversal au ruban, est atteint au moyen d'un certain nombre de radiateurs 35 disposés les uns au dessus des autres à l'intérieur de la chambre de chauffe 20, 21, en un nombre croissant transversalement à la direction d'avance comme le montre la figure 5. Les radiateurs 35 peuvent être réglés individuellement de sorte que l'on peut jouer d'une part sur la mise en service ou la coupure de chacun d'eux, d'autre part sur le réglage de sa température de fonctionnement.

Dans la région où le ruban est chauffé de manière hétérogène, une traction l'allonge de façon en partie plastique et en partie élastique. Cette traction est exercée par le rouleau valseur 23 qui applique sur la feuille, sous l'effet de son poids P, réglable, une force uniforme agissant de façon égale sur les deux brins, y compris le segment de ruban 14' en aval du rouleau valseur 23. L'allongement du ruban sous l'action du rouleau valseur 23 peut aller de 1,1 à 1,4 selon l'élévation du matériau en température et le poids P du rouleau valseur. C'est pourquoi les deux tambours refroidisseurs 25 et 26 et le dispositif de réenroulement 28 sont entraînés à une vitesse périphérique V₂ de 10 à 40% supérieure à la vitesse de déroulement V₁ imposée par les rouleaux 16 et 17.

Les tambours refroidisseurs 25 et 26 sont accompagnés de rouleaux de conduite 38 qui déterminent le degré d'enroulement du ruban sur leur surface. Ils sont refroidis par fluide jusqu'à une température suffisante pour que leur contact avec le ruban amène ce dernier à une température inférieure d'environ 10° C à la température de relâchement des contraintes. Par suite de son enroulement successif sur chacun d'eux, selon la figure, les deux faces du ruban sont refroidies de façon rapide et uniforme. Une fois qu'il a quitté le tambour refroidisseur 26, le brin 14" du ruban renfermant des contraintes de traction gelées hétérogènes est enroulé par l'enrouleur 28 sur un moyeu ou tambour cylindrique en un rouleau 40 qui sera maintenu à une température inférieure à la température de transformation jusqu'à ce qu'il soit réutilisé pour la fabrication des parebrise. Pour ce faire, on le stockera et le transportera au besoin dans un conteneur frigorifique.

Le ruban sera ensuite déroulé et découpé en feuilles dont chacune sera portée à une température supérieure à la température T. La feuille correspondante prend sa forme finale cintrée en l'espace de quelques heures, selon la température.

Un exemple est donné ci-dessous pour la fabrication de feuilles cintrées en arc de cercle, dans lesquelles le rayon de courbure de la limite du filtre lumineux est de l'ordre de 230 cm. Les conditions sont les suivantes:

Le ruban initial est un ruban d'une largeur de 73 cm et d'une épaisseur de 0,76 mm renfermant 28% de plastifiant, enroulé sous forme d'un rouleau d'alimentation 13. Le long du bord, il possède une bande filtrante colorée d'une largeur de 20 cm.

Les rouleaux dérouleurs 16 et 17 le débitent à une vitesse de 7,5 m/mn. Les radiateurs 35 installés à l'intérieur de la chambre 20, 21 sont répartis selon le schéma de la figure 5 sur chacune des deux faces du ruban à une distance de celui-ci de 50 mm. Ils ont une température superficielle de 420°C. A la sortie de la chambre, le ruban ainsi réchauffé possède le profil de température suivant: du côté du filtre et à une distance de 2 centimètres du bord, la température est de l'ordre de 50°C, dans le milieu de 80°C et sur le bord opposé, à 2 centimètres du bord, de 160°C.

Le rouleau porteur 23 est chargé à 11 kg, créant une traction moyenne de 2 daN/cm² dans la section de la feuille. La vitesse du moteur d'entraînement des tambours 25 et 26 est réglée par l'intermédiaire du rouleau 23, la descente de celui-ci les accélérant et sa remontée les faisant ralentir, et leur vitesse périphérique moyenne dans les conditions données est de 10,2 m/mn. Sous l'action de la traction ainsi exercée, le ruban s'allonge de 36%, et dans le sens transversal, sa largeur se réduit de 73 à 62 cm à la sortie de la chambre de chauffe 20, 21. Le ruban passe immédiatement dans une enceinte refroidie et dès lors se trouve à la température de 8°C. C'est dans cette enceinte que sont placés les tambours 25 et 26 dont la température superficielle est réglée à une valeur de 5°C au moyen d'un circuit de fluide refroidisseur. Le ruban figé est enroulé en un rouleau 40 et stocké à une température de l'ordre de 10°C.

Au bout de deux mois pendant lesquels la température du rouleau 40 a été maintenue à 10°C, on découpe dans le ruban des feuilles de 180 cm de long que l'on réchauffe à une température de l'ordre de 22°C. Au bout de 48 h ces feuilles, se raccourcissant de façon inégale, ont pris une forme circulaire. Le long de l'arête qui longe le filtre, la feuille revient à la longueur qu'elle avait avant l'étirage, ce qui correspond à une déformation purement élastique au cours du processus d'étirage; le long du bord opposé le raccourcissement après relâchement des contraintes est extrèmement faible, et à la limite non mesurable. Le rayon de courbure de la limite du filtre est de 230 cm, ce qui correspond sensiblement à la courbure désirée sur un grand nombre de pare-brise de type courant.

## Revendications

1. Feuille de haut polymère synthétique thermoplastique pour la fabrication d'intercalaires de vitrages feuilletés tels que des pare-brise d'automobiles, caractérisée en ce qu'elle est constituée d'un haut polymère ayant une température de transformation inférieure à la température ambiante, qu'elle est maintenue par refroidissement en dessous de ladite température de transformation, et en ce qu'elle présente des contraintes de traction longitudinales gelées dont l'intensité varie dans le sens transversal, les contraintes de traction gelées atteignant leur maximum le long d'un bord longitudinal (2) et décroissant régulièrement en direction du bord opposé (3) en étant d'un niveau tel que la feuille se déforme en une feuille cintrée par simple relâchement des contraintes sous réchauffage à température voulue.

2. Feuille selon la revendication 1, caractérisée en ce que les contraintes gelées résultent d'un étirage élastique atteignant jusqu'à 40% dans la zone correspondant à la contrainte maximale.

3. Feuille selon l'une des revendications 1 ou 2, caractérisé en ce qu'elle est enroulée sous forme d'un rouleau cylindrique (40).

4. Feuille selon l'une des revendications 1 à 3, caractérisée en ce qu'elle est constituée de polyvinylbutyral renfermant de 15 à 30% de plastifiant et possédant une température de transformation sensiblement comprise entre 305 et 285 K.

5. Feuille selon l'une des revendications 1 à 4, caractérisée en ce qu'elle comprend une bande filtrante (6) teintée le long du bord soumis aux contraintes de traction longitudinales les plus importantes.

6. Procédé pour la fabrication d'une feuille selon l'une des revendications 1 à 5, caractérisé en ce qu'un ruban est soumis en continu à une élévation de température augmentant régulièrement d'un bord longitudinal (3) au bord opposé (2) et simultanément étiré de façon uniforme à un allongement allant jusqu'à 40%, et que les contraintes de traction induites dans le domaine de déformation élastique sont gelées par refroidissement en dessous de la température de transformation tandis que le ruban se trouve encore sous tension, et en ce que le cintrage des feuilles est produit après découpage du ruban par simple relâchement des contraintes sous l'effet de la température ambiante supérieure à la température de transformation.

## Patentansprüche

1. Folie aus hochpolymerem thermoplastischem Kunststoff für die Herstellung von Zwischenschichten von Verbundglasscheiben wie Automobil-Windschutzscheiben, dadurch gekennzeichnet, daß sie aus einem hochpolymeren Kunststoff mit einer unterhalb der Umgebungstemperatur liegenden Transformationstemperatur besteht, daß sie durch Kühlung auf einer Temperatur unterhalb der Transformationstemperatur gehalten wird, und daß sie eingefrorene Zugspannungen in Längsrichtung aufweist, deren Größe sich in Querrichtung ändert, wobei die eingefrorenen Zugspannungen ihren höchsten Wert entlang einer Längskante (2) erreichen und in Richtung auf die gegenüberliegende Kante (3) gleichmäßig abnehmen und eine solche Größe aufweisen, daß die Folie bei Wiedererwärmung auf eine gegebene Temperatur durch einfachen Abbau der Spannungen sich in eine gebogene Folie verformt.

2. Folie nach Anspruch 1, dadurch gekennzeichnet, daß die eingefrorenen Spannungen aus einer elastischen Dehnung resultieren, die in der Zone, die der höchsten Spannung entspricht, bis zu 40% erreicht.

3. Folie nach Anspruch 1 oder 2, dadurch gekennzeichnet, daß sie in Form einer zylindrischen Rolle (40) aufgerollt ist.

4. Folie nach einem der Ansprüche 1 bis 3, dadurch gekennzeichnet, daß sie aus Polyvinylbutyral mit einem Weichmacheranteil von 15 bis 30% besteht und eine Transformationstemperatur von im wesentlichen zwischen 305 und 285 K aufweist.

5. Folie nach einem der Ansprüche 1 bis 4, dadurch gekennzeichnet, daß sie entlang derjenigen Kante, die die größten Zugspannungen in Längsrichtung aufweist, mit einem eingefärbten Filterband (6) versehen ist.

6. Verfahren zur Herstellung einer Folie nach einem der Ansprüche 1 bis 5, dadurch gekennzeichnet, daß ein Folienband in kontinuierlicher Weise einer erhöhten Temperatur ausgesetzt wird, die gleichmäßig von einer Längskante (3) zur gegenüberliegenden Kante (2) zunimmt, und gleichzeitig gleichmäßig in Längsrichtung um bis zu 40% gedehnt wird, und daß die in dem elastisch verformten Bereich entstehenden Zugspannungen durch Abkühlung auf eine Temperatur unterhalb der Transformationstemperatur eingefroren werden, während sich das Folienband noch unter Spannung befindet, und daß die Verformung der Folien nach dem Abschneiden von dem Folienband durch einfachen Spannungsabbau unter der Wirkung der oberhalb der der Transformationstemperatur liegenden Umgebungstemperatur erfolgt.

**Claims**

1. A sheet of thermoplastic synthetic high polymer for making intermediate layers of laminated panes such as automobile windscreens, characterised in that it comprises a high polymer having a transformation temperature lower than ambient temperature, it is held below said transformation temperature by cooling, and it has fixed therein longitudinal tensile stresses of which the magnitude varies in the transverse direction, the fixed tensile stresses having a maximum value along a longitudinal edge (2) and decreasing regularly in the direction of the opposite edge (3), their value being such that the sheet is deformable to a curved sheet by simple relief of the stresses on heating to a desired temperature.

2. A sheet according to claim 1, characterised in that the fixed stresses result from elastic stretching of up to 40% in the zone corresponding to maximum stress.

3. A sheet according to claim 1 or 2, characterised in that it is rolled up in the form of a cylindrical roll (40).

4. A sheet according to one of claims 1 to 3, characterised in that it comprises polyvinylbutyral containing from 15% to 3% of plasticiser and having a transformation temperature substantially from 305 to 285° K.

5. A sheet according to one of claims 1 to 4, characterised in that it comprises a tinted filter strip (6) along the edge subjected to the greatest longitudinal tensile stresses.

6. Method of making a sheet according to one of claims 1 to 5, characterised in that a ribbon is subjected continuously to a rise in temperature which increases regularly from one longitudinal edge (3) to the opposite edge (2) and is simultaneously stretched uniformly to an elongation of up to 40%, the tensile stresses induced in the region of elastic deformation are fixed by cooling below the transformation temperature while the ribbon is still under tension, and curving of the sheets is produced after cutting to shape of the ribbon by simple release of the stresses under the effect of an ambient temperature higher than the transformation temperature.

**Fig. 1**

**Fig. 2**

**Fig. 3**

Fig. 4

Fig.5